Europäisches Patentamt

European Patent Office

Office européen des brevets

(19)

(11) Publication number: **0 043 846**
**B1**

# EUROPEAN PATENT SPECIFICATION

(12)

(45) Date of publication of patent specification: **09.04.86**

(21) Application number: **81900472.2**

(22) Date of filing: **12.01.81**

(86) International application number:
**PCT/US81/00051**

(87) International publication number:
**WO 81/01993 23.07.81 Gazette 81/17**

(51) Int. Cl.⁴: **B 65 D 37/00**

(54) **Device for dispensing amounts of a liquid and base member for such a dispensing device.**

(30) Priority: **14.01.80 US 112014**

(43) Date of publication of application:
**20.01.82 Bulletin 82/03**

(45) Publication of the grant of the patent:
**09.04.86 Bulletin 86/15**

(84) Designated Contracting States:
**AT CH DE FR GB LI LU NL SE**

(56) References cited:
**FR-A-1 039 725**
**FR-A-1 389 996**
**US-A-1 127 387**
**US-A-2 989 215**
**US-A-3 381 860**
**US-A-3 797 513**

(73) Proprietor: **KAUFMAN, Karyn Jean**
**858 Condor Drive Burlington**
**Ontario L7T 3A7 (CA)**

(73) Proprietor: **KAUFMAN, John George**
**858 Condor Drive Burlington**
**Ontario L7T 3A7 (CA)**

(72) Inventor: **KAUFMAN, John George**
**858 Condor Drive**
**Burlington Ontario L7T 3A7 (CA)**

(74) Representative: **Klunker, Hans-Friedrich, Dr.**
**et al**
**Patentanwälte Klunker . Schmitt-Nilson . Hirsch**
**Winzererstrasse 106**
**D-8000 München 40 (DE)**

Courier Press, Leamington Spa, England.

## Description

The invention relates to a dispensing device for dispensing individual amounts of a liquid, comprising a container for storing a supply of the liquid and comprising a passageway which is designed to provide a fluid flow communication between the interior of the container and a discharge opening and which includes an upwardly extending passageway portion and an outlet passageway portion, the device comprising actuation means for increasing the pressure within the container for expelling an amount of the liquid through the passageway, which allows subsequent automatic pressure release to suck ambient air into the container.

The term "liquid" as used for convenience in this patent is intended to comprise not only liquids in the narrow sense of the word, but also semi-liquids, semi-solid products such as soaps, creams, cosmetics, lotions or the like, and powders and similar flowable fluids.

In many applications, there is a need for a dispensing device which can be simply and reliably operated to deliver a small quantity of liquid therefrom, without resulting in deposit of residual liquid in the outlet. In household applications, for instance, there is a need for a liquid dispenser which will deliver small quantities of liquid soap, cosmetic, cream, lotion or the like on demand, and remain in clean condition after use. Flexible, squeeze bottles with simple narrow nozzle apertures are commonly used, but such arrangements commonly result in fouled outlet apertures after use over an extended period of time. This is a particular problem with containers of thick, pastey liquids such as liquid soaps, hand creams and other cosmetic preparations. There is also a need for dispensing devices for semi-solid products such as soaps, shaving creams, cosmetic lotions and the like which can be kept in temperature variable environments such as personal bathrooms, showers etc. in an "outlet downward" condition for ease of operation. Such dispensing devices should not allow their contents to drip or leak from the outlet even when subjected to varying environmental temperatures. In addition, they should be easy and simple to operate with one hand by the user, and should dispense relatively constant amounts of contents with each operation.

A dispensing device of the initially indicated type is known from FR—A—1 389 996. This dispensing device comprises a compressible container mounted within a casing, and a passageway of inverted U-shape. When the container is compressed, an amount of liquid is pressed through the passageway and discharged. When the compression force exerted on the container is released, air enters into the container through a fine passage at the mounting location of the container or through a different suitable air flow connection provided for this purpose. After the discharge of an amount of the liquid, the liquid level within the passageway will, therefore, be at the highest inner point of the passageway bend. Bringing the dispensing device into an adversely inclined position or exposing it to an environment of higher temperature than before would result in an escape of liquid from the container.

It is the problem underlying the invention to provide a liquid dispensing device which is protected against unintended escape of liquid in the not actuated state.

According to the invention the liquid dispensing device is characterized in that the passageway constitutes the only fluid flow connection between the interior of the container and the ambient air, so that air is sucked back through the passageway thereby establishing a liquid level in the upwardly extending passageway portion which is below the upper end of the upwardly extending passageway portion.

FR—A—1 039 725 discloses a dispensing device for dispensing individual amounts of liquid soap. The dispensing device comprises a vertical cylindrical wall within the lower portion of a container and a plunger-like member surrounded by that wall. When the plunger-like member is pushed upwardly by hand, a passageway of inverted U-shape is opened for the discharge of liquid. Then the plunger-like member sinks down and closes the passageway again after a quantity of the liquid soap has been discharged. No ambient air is sucked back through the passageway.

When the dispensing device according to the invention is in the non-actuated state, the space from above the liquid level in the upwardly extending passageway portion to the outlet passageway portion constitutes an air pocket. The dispensing device can be operated to dispense quantities of liquid therefrom, via the intermediary of the air pocket structure overlying the entrance to the outlet passageway portion. There is provided a means for increasing the pressure in the space above the liquid level in the container, for example the resiliently flexible walls of a squeezable bottle. Liquid within the bottle is forced through the air pocket as a result of the pressure increase, to discharge the liquid down the outlet passageway portion and out of the dispensing device. Immediately upon release of the applied pressure, air is drawn back through the outlet passageway portion to restore the air pocket and to restore the normal pressure in the space above the liquid in the container. In so doing, the air flow serves to clean liquid residues from the outlet passageway portion and to maintain it in satisfactory, sanitary condition. Moreover, in the dispensing device according to the invention, the amount of liquid discharged is proportional to the increase in pressure created in the air-filled or gas-filled space above the liquid level in the container. Thus the amount of pressure applied can be regulated so as to discharge the required amount of liquid through the discharge arrangement. In addition, the air pocket arrangement guards against unwanted leakage from the container through the outlet, when the container is mounted in its normal, outlet downwards operative position, and even when subjected to varying temperatures, since the entrance to the outlet passageway portion is disposed in retained air.

In one embodiment of the invention, the means for varying the gas pressure above the liquid in the container comprises a resiliently compressible wall of the container itself. Thus, the container is effectively a squeeze bottle, or at least has a compressible body, allowing the device to be simply operated by hand squeezing of the container body. In other embodiments, however, more accurate, sophisticated means for pressure variation may be adapted. Since, as further discussed below, the quantity of fluid to be dispensed is proportional to the increase in pressure applied, alternative embodiments use accurate pressure varying means, such as a reciprocal piston-plunger arrangement operating on the container flexible wall, or directly in the gas space above the fluid, to reduce the volume of said space and hence increase the pressure therein, in an accurately controllable manner. In a further embodiment, the pressure varying means may be heating means adapted to heat gas in the space above the fluid. Alternatively, the means can be a pump for pumping air, water etc. into the space.

Whilst the lower end of the outlet passageway portion through which fluid is discharged to atmosphere, should be below the air pocket, it does not need to be vertically below it, i.e. there is not need to use a vertically downwardly extending outlet passageway portion. Thus the device of the invention may adopt a variety of shapes and configurations, chosen to suit its particular application and working environment.

Preferred embodiments of the invention are claimed in claims 2 to 14.

The invention relates further to a base member for use together with a container storing a supply of liquid as a dispensing device according to the invention, i.e. relates to the dispensing device without the container mounted thereto. The base member comprises a screw thread for securing the container thereto, a cup-shaped space for housing the passageway, and the discharge opening.

Specific embodiments of the invention are illustrated in the accompanying drawings, for purposes of exemplification, in which

FIGURE 1 is a diagrammatic representation of a container and discharge means therefor, illustrating the principle of operation of the present invention;

FIGURE 2 is a cross sectional view of a practical embodiment of a container and discharge means according to the invention;

FIGURE 3 is a similar cross sectional view of a second embodiment of the invention.

In the drawings, like reference numerals indicate like parts.

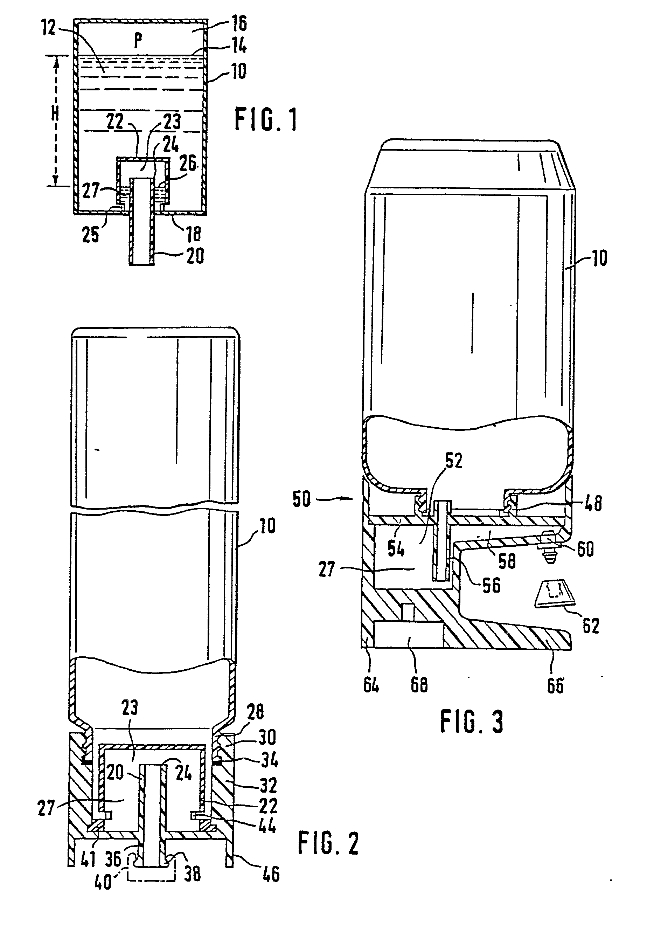

With reference to Fig. 1, there is diagrammatically illustrated therein a container 10 in the body of which is a liquid 12 extending up to a level 14. An air space 16 is left, above the liquid level 14. Protruding downwardly through the bottom wall 18 thereof and sealed thereto is an outlet passageway in the form of a conduit 20. An air pocket structure in the form of an inverted bell 22 is provided within the body of container 10, secured to the container 10 at a location to overlie the inlet end 24 of the outlet conduit 20, but having free communication with the interior of the container 10 via slots 25. The container body is substantially sealed apart from the outlet conduit 20. When liquid is contained in the container 10 and the container 10 is then disposed as shown in Fig. 1, with the outlet conduit 20 extending downwardly therefrom, a pocket of air is formed in bell 22, communicating with the outlet conduit 20 and hence at outside atmospheric pressure. Liquid enters the chamber 23 within the bell 22 to a level 26 leaving air in the bell 22. In this manner, the container 10 and its contents can be stored in the position shown. Liquid will not escape or drip from the outlet conduit 20, whilst the container 10 is thus left undisturbed, due to the establishment of an equilibrium pressure P in the top space of the container 10 above the liquid level 14, in relationship to the liquid levels 14, 26. A cap is not necessary.

In order to discharge material from the container 10, through the outlet conduit 20, the pressure P in the space 16 above the liquid level 14 must be increased by some suitable means. In the case where the container 10 is a resiliently sided flexible bottle, this pressure increase can be achieved merely by squeezing. In other arrangements, the container walls may be mechanically compressed, the vessel may contain a plunger arrangement movable therein to increase pressure, or the gas above the liquid may be heated by suitable means. When this occurs, liquid level 14 tends to fall, and liquid level 26 in the bell 22 tends to rise. As the pressure P increases, level 26 eventually rises above the top 24 of outlet conduit 20, and liquid starts to discharge through conduit 20.

The passageway for the liquid to be dispensed leads from the interior of the container 10 through the slots 25, an upwardly extending passageway portion 27 within the bell 22 and then through an outlet passageway portion provided by the outlet conduit 20.

When pressure in space 16 is relieved, e.g. by releasing the squeeze on the bottle, pressure P will be less than outside, atmospheric pressure, and consequently, air will be sucked in through conduit 20, through the air pocket structure, to bubble up through the liquid 12 to restore an equilibrium pressure P in the space 16. The return of air through conduit 20, occurring substantially immediately after discharge of liquid therethrough, has the effect of cleaning the liquid residues from the side walls of the conduit 20, to maintain the conduit 20 in a clean, sanitary condition between operations. The use of a closure cap, except for shipping purposes, is thus rendered unnecessary.

The amount of liquid to be discharged through conduit 20 of a given structure as shown is proportional to the increase in pressure P in space 16. The apparatus functions according to the general equation:

$$H \times sg + P = \text{atmospheric pressure}$$

where H represents the difference in level between liquid level 14 in the main body of the container 10, and liquid level 26 in the air pocket structure, P represents the pressure in the gas space 16 above the liquid level 14, and sg represents the specific gravity of the liquid. It can thus be seen that any increases in pressure P above the liquid level 14 must cause a corresponding decrease in H, the liquid head, to operate in accordance with the above equation. Increase in pressure P thus causes a corresponding loss of liquid through the discharge outlet conduit 20, to arrange for the new, required value of H, the amount of discharged liquid depending upon the amount of pressure applied above the liquid level 14. Upon release of the applied pressure, e.g. by relaxation of the squeeze bottle, air is drawn in to restore an equilibrium pressure P, corresponding to the newly established value of H resulting after the discharge of the quantity of liquid through the outlet conduit 20. In this way, the amount of liquid discharged is determined by the amount of pressure applied to the space 16 above the liquid 12.

The use of the air pocket structure in accordance with the present invention ensures that the liquid is maintained within the container 10 whilst the container 10 is at rest, and that there is no risk of dripping or other leakage of the contents through the outlet conduit 20. The liquid level 26 in the vicinity of the outlet conduit 20 is well below the entrance 24 to the outlet conduit 20, so that dripping and leakage are avoided. When the pressure is relaxed, air is drawn into the body of the container 10 through the outlet conduit 20, to clean and dry the outlet conduit 20 itself, to prevent residual drip therefrom as well as to prevent accumulation and resultant clogging of materials therein. It is of course necessary that the container 10 itself be substantially hermetically sealed, apart from the aforementioned outlet conduit 20, for proper control of the pressure above the liquid level 14.

With the structure according to the invention, there must be a certain, finite increase in pressure P above the liquid level 14, before any liquid issues from conduit 20, so as to cause a sufficient rise of liquid in the air pocket structure. As a consequence, a device according to the present invention is eminently suitable for use in environments of variable temperatures. An example is its use for containing soaps, shampoos, cosmetics and the like in a personal bathroom or shower closet. A squeeze bottle equipped with outlet means as described herein can be mounted on the wall of the shower closet, with the outlet passageway extending downwardly, and can contain shampoo, for example. When the shower closet is in use, the temperature therein may rise considerably, with consequent increase in pressure P within the bottle. This will cause rise of liquid level 26 in the air pocket structure, but no liquid will issue from outlet conduit 20 until there has been a sufficient increase in P to raise liquid level 26 over the entrance 24 of the outlet conduit 20. By suitable adjustment of the height of the top end 24 of the outlet conduit 20, therefore, the device can be arranged to withstand the range of temperature changes without leakage, and without requiring the use of a capped outlet conduit 20. In the embodiment shown in Fig. 1, the outlet conduit 20 is height adjustable relative to bottom wall 18, by sliding adjustment, whilst bell 22 is fixed.

With reference to Fig. 2, the container 10 shown therein is a flexible walled, squeeze bottle, terminating at its lowermost end in a narrower, screw threaded neck 28. The neck 28 is releasably received in a complementary upwardly presented female screw thread 30 on an outlet closure or base member 32, through the intermediary of a resilient sealing gasket 34. The body of the base member 32, which is generally cylindrical in shape, contains therein an integral outlet passageway portion or conduit 20, the upper end 24 of which is disposed near the upper, screw thread 30 thereof, and the lower end 36 of which projects beyond the bottom wall 18 of the base member 32, to terminate in an enlarged radial bead 38. A snap-fitting releasable cap 40 may be fitted over the bead 38, to protect against leakage during transportation.

The body of the base member 32 also contains therein an air pocket structure in the form of an inverted bell 22, having a radially outwardly extending lip 41 which is a snap fit in a radial groove 42 in the bottom of the side wall of the base member 32. The side wall of bell 22 has a series of radially presented slots 44 which allow liquid communication between the body of base member 32 and hence the interior of container 10, and the bell 22. The bottom wall 18 of the base member 32 is provided with downwardly extending integral legs 46 so that the assembly may be free-standing, clear of the lower end 36 of the base member outlet when cap 40 is removed.

The operation of the device shown in Fig. 2 will be clear from the above description and Fig. 1. When the assembly is put in the position shown in Fig. 2, liquid from container 10 enters the bell 22 through slots 44 to form an air pocket between the body of liquid and the outlet conduit 20. Cap 40 may be removed, and the liquid contents will not drip or leak from the outlet. The container 10 will withstand temperature variations so long as liquid does not rise in the bell 22 sufficiently to enter conduit 20. To discharge material therefrom, container 10 is squeezed, to cause liquid to rise in bell 22 and discharge liquid down conduit 20. As soon as the squeezing pressure is relieved, the relaxation of the container 10 acts to draw air in through conduit 20, thereby effecting cleaning of the conduit 20 and restoring the air pocket in bell 22.

Container 10 is a disposable item, which when empty can be unscrewed from engagement with base member 32. Another, filled squeeze container 10 can then be replaced in the base member 32. The base member 32 may if desired be wall mounted, as a permanent receptacle for liquid containers. The base member 32 is suitably made of semi-rigid plastics material. It is a simple, economical 2-part construction with bell 22 being a simple snap fit in the base member body as shown.

Fig. 3 shows an embodiment of the invention which is in many respects similar to that of Fig. 2. It also comprises a squeeze bottle 10 containing liquid, the neck of which is threadably received in a complementary threaded neck 48 of a closure or base member 50. Within the base member 50 is a chamber 52 bounded at the topside by a top wall 54 on which the end of the container neck is disposed. A depending conduit 56 extends from the neck 48 to the base member 50 into the lower part of the chamber 52, so that liquid from container 10 can enter chamber 52, downwardly through conduit 56 when the container 52 is disposed neck downwards, as shown.

The top wall 54 and chamber 52 extend laterally forwardly a substantial distance from conduit 56 forming a narrow forward chamber portion 58. At the lower forward extremity of chamber portion 58, there is provided an outlet aperture 60, with a releasable cap 62 therefor, so that, in effect, the chamber portion 58 and the outlet aperture 60 together provide the outlet passageway portion. The lowermost surface of base member 50 is provided with legs 64 and a forwardly extending base 66, on which the assembly may rest. The base 66 and forward chamber portion 58 define a bight formation therebetween, in which is located the outlet aperture 60. Bottom recess 68 in the base provides a storage facility for cap 62.

It will thus be noted that the outlet aperture 60 in the embodiment is laterally displaced from the conduit 56, the chamber 52 and the air pocket structure. The operation is substantially the same as previously described. Liquid from container 10 will enter chamber 52 to a certain level therein. Increase of pressure above the level of liquid in container 10 will cause liquid to rise in chamber 52 and then eventually to exit via chamber portion 58 and outlet aperture 60. Release of pressure in container 10 will cause air to be drawn back through aperture 60 and into chamber 52. This arrangement is particularly useful for a free-standing device, in which the user can place a hand between base 66 and chamber portion 58, to receive material from aperture 60.

As noted in connection with the embodiment of Fig. 1, the height of the top entrance 24 of outlet conduit 20 above the equilibrium level 26 of the liquid in the air pocket structure determines the amount of pressure to be applied before liquid is discharged. Similarly, this height provides the temperature change tolerance before discharge. It is therefore of advantage to make the outlet conduit 20 adjustable relative to the air pocket structure, to tolerate different temperature variations. In Fig. 1, this is done by sliding adjustment of the outlet conduit 20. In alternative embodiments, this can be achieved in other ways such as by rotation or angular adjustment of the outlet passageway portion or the air pocket structure, resulting in alteration of the separation therebetween.

Whilst specific preferred embodiments of the invention have been described and illustrated in detail herein, these are not to be construed as limiting.

Many other alternative structures and configurations are within the scope and spirit of the present invention, limited only by the scope of the appended claims.

Whilst the operation of the device has been described primarily with reference to liquids, it is not limited strictly to such operation. Free-flowing powders can also be used as well as creams, gels and the like and such materials are to be considered within the term liquids as used herein.

## Claims

1. A dispensing device for dispensing individual amounts of a liquid, comprising a container (10) for storing a supply of the liquid and comprising a passageway (25/44, 27, 24, 20; 56, 27, 52, 60) which is designed to provide a fluid flow communication between the interior of the container (10) and a discharge opening and which includes an upwardly extending passageway portion (27) and an outlet passageway portion (20; 60), the device comprising actuation means for increasing the pressure within the container (10) for expelling an amount of the liquid through the passageway (25/44, 27, 24, 20; 56, 27, 52, 60), which allows subsequent automatic pressure release to suck ambient air into the container (10), characterized in that the passageway (25/44, 27, 24, 20; 56, 27, 52, 60) constitutes the only fluid flow connection between the interior of the container (10) and the ambient air, so that air is sucked back through the passageway (25/44, 27, 24, 20; 56, 27, 52, 60) thereby establishing a liquid level in the upwardly extending passageway portion (27) which is below the upper end of the upwardly extending passageway portion (27).

2. A dispensing device according to claim 1, characterized by a chamber (23; 52) into the lower portion of which liquid from the interior of the container (10) may enter and from the upper portion of which liquid may be expelled through the outlet passageway portion (20; 60), thereby forming the upwardly extending passageway portion (27).

3. A dispensing device according to claim 2, characterized in that the chamber (23) is delimited by an inverted cup-shaped wall (22).

4. A dispensing device according to claim 3, characterized in that the inverted cup-shaped wall (22) is provided with apertures (25; 44) for the entry of liquid.

5. A dispensing device according to any one of the claims 2 to 4, characterized in that the outlet passageway portion is provided by a conduit (20) having an upper end (24) in the upper portion of the chamber (23).

6. A dispensing device according to claim 5, characterized in that the vertical position of the upper end (24) of the outlet conduit (20) is adjustable.

7. A dispensing device according to claim 2, characterized by a conduit (56) having a lower end in the lower portion of the chamber (52) for the entry of liquid.

8. A dispensing device according to claim 2 or 7, characterized in that the outlet passageway portion is provided by an aperture (60) in the upper portion of the chamber (52).

9. A dispensing device according to claim 8, characterized in that the chamber wall includes a portion which slopes downwardly from the aperture (60).

10. A dispensing device according to any one of the claims 2 to 9, characterized in that the chamber (23) is located within the container (10).

11. A dispensing device according to any one of the claims 2 to 9, characterized in that the chamber (23; 52) is located externally of the container (10).

12. A dispensing device according to any one of the claims 1 to 11, characterized in that the actuation means is provided by a resilient compressible container (10).

13. A dispensing device according to any one of the claims 1 to 12, characterized by a base member (32; 50) to which the container (10) is detachably secured, the base member (32; 50) housing the passageway (25/44, 27, 24, 20; 56, 27, 52, 60) and including the discharge opening.

14. A dispensing device according to claim 13, characterized in that the container (10) is secured to the base member (32; 50) by a screw thread (28, 30; 48).

15. A base member (32; 50) for use together with a container (10) storing a supply of liquid as a dispensing device according to claim 13 or 14, characterized in that the base member (32; 50) comprises a screw thread (30; 48) for securing the container (10) thereto, a cup-shaped space for housing the passageway (44, 27, 24, 20; 56, 27, 52, 60), and the discharge opening.

**Patentansprüche**

1. Abgabegerät zum Abgeben einzelner Mengen einer Flüssigkeit, mit einem Behälter (10) zum Vorrätighalten eines Vorrats der Flüssigkeit und mit einem Durchgang (25/44, 27, 24, 20; 56, 27, 52, 60), der so ausgelegt ist, daß er eine Fluidströmungsverbindung zwischen dem Inneren des Behälters (10) und einer Abgabeöffnung bildet, und der einen aufwärts verlaufenden Durchgangsbereich (27) sowie einen Auslaß-Durchgangsbereich (20; 60) aufweist, wobei das Gerät eine Betätigungseinrichtung zur Erhöhung des Drucks in dem Behälter (10) zum Herausdrücken einer Menge der Flüssigkeit durch den Durchgang (25/44, 27, 24, 20; 56, 27, 52, 60) aufweist, welche Betätigungseinrichtung eine nachfolgende automatische Druckbefreiung zum Saugen von Umgebungsluft in den Behälter (10) erlaubt, dadurch gekennzeichnet, daß der Durchang (25/44, 27, 24, 20; 56, 27, 52, 60) die einzige Fluidströmungsverbindung zwischen dem Inneren des Behälters (10) und der Umgebungsluft darstellt, so daß Luft durch den Durchgang (25/44, 27, 24, 20; 56, 27, 52, 60) zurückgesaugt wird, wodurch sich in dem aufwärts verlaufenden Durchgangsbereich (27) ein Flüssigkeitsniveau einstellt, das unter dem oberen Ende des aufwärts verlaufenden Durchgangsbereichs (27) ist.

2. Abgabegerät nach Anspruch 1, gekennzeichnet durch eine Kammer (23; 52), in deren unteren Bereich Flüssigkeit aus dem Inneren des Behälters (10) eintreten kann und aus deren oberem Bereich Flüssigkeit durch den Auslaß-Durchgangsbereich (20; 60) herausgedrückt werden kann, wodurch der nach oben verlaufende Durchgangsbereich (27) gebildet ist.

3. Abgabegerät nach Anspruch 2, dadurch gekennzeichnet, daß die Kammer (23) durch eine umgekehrt becherförmige Wand (22) begrenzt ist.

4. Abgabegerät nach Anspruch 3, dadurch gekennzeichnet, daß die umgekehrt becherförmige Wand (22) mit Öffnungen (25; 44) für den Eintritt von Flüssigkeit versehen ist.

5. Abgabegerät nach einem der Ansprüche 2 bis 4, dadurch gekennzeichnet, daß der Auslaß-Durchgangsbereich durch eine Leitung (20) mit einem oberen Ende (24) in dem oberen Bereich der Kammer (23) gebildet ist.

6. Abgabegerät nach Anspruch 5, dadurch gekennzeichnet, daß die vertikale Position des oberen Endes (24) der Auslaßleitung (20) einstellbar ist.

7. Abgabegerät nach Anspruch 2, gekennzeichnet durch eine Leitung (56) mit einem unteren Ende in dem unteren Bereich der Kammer (52) zum Eintreten der Flüssigkeit.

8. Abgabegerät nach Anspruch 2 oder 7, dadurch gekennzeichnet, daß der Auslaß-Durchgangsbereich durch eine Öffnung (60) in dem oberen Bereich der Kammer (52) gebildet ist.

9. Abgabegerät nach Anspruch 8, dadurch gekennzeichnet, daß die Kammerwand einen Bereich aufweist, der schräg abwärts von der Öffnung (60) verläuft.

10. Abgabegerät nach einem der Ansprüche 2 bis 9, dadurch gekennzeichnet, daß die Kammer (23) in dem Behälter (10) positioniert ist.

11. Abgabegerät nach einem der Ansprüche 2 bis 9, dadurch gekennzeichnet, daß die Kammer (23; 52) außerhalb des Behälters (10) positioniert ist.

12. Abgabegerät nach einem der Ansprüche 1 bis 11, dadurch gekennzeichnet, daß die Betätigungseinrichtung durch einen elastisch zusammendrückbaren Behälter (10) gebildet ist.

13. Abgabegerät nach einem der Ansprüche 1 bis 12, gekennzeichnet durch ein Basisteil (32; 50), an dem der Behälter (10) lösbar befestigt ist, wobei das Basisteil (32; 50) den Durchgang (25/ 44, 27, 24, 20; 56, 27, 52, 60) enthält und die Abgabeöffnung aufweist.

14. Abgabegerät nach Anspruch 13, dadurch gekennzeichnet, daß der Behälter (10) durch ein Schraubgewinde (28, 30; 48) an dem Basisteil (32; 50) befestigt ist.

15. Basisteil (32; 50) zur Verwendung zusammen mit einem Behälter (10), der einen Vorrat von Flüssigkeit enthält, als Abgabegerät nach Anspruch 13 oder 14, dadurch gekennzeichnet, daß das Basisteil (32; 50) ein Schraubgewinde (30; 48) zur Befestigung des Behälters (10) daran, einen becherförmigen Raum zur Beinhaltung des Durchgangs (44, 27, 24, 20; 56, 27, 52, 60) und die Abgabeöffnung aufweist.

**Revendications**

1. Dispositif distributeur pour distribuer des quantités individuelles d'un liquide, comprenant un réceptacle (10) pour stocker une certaine quantité du liquide et un passage (25/44, 27, 24, 20; 56, 27, 52, 60) conçu pour réaliser la communication pour des fluides entre l'intérieur du réceptacle (10) et une ouverture de décharge et qui comprend une partie de passage s'étendant vers le haut (27) et une partie de passage de sortie (20; 60), le dispositif comportant des moyens d'actionnement pour augmenter la pression dans le réceptacle (10) de façon à expulser une certaine quantité de liquide par le passage (25/44, 27, 24, 20; 56, 27, 52, 60), ce qui permet de réduire ensuite automatiquement la pression et d'aspirer l'air ambiant dans le réceptacle (10), caractérisé en ce que le passage (25/44, 27, 24, 20; 56, 27, 52, 60) constitue la seule liaison pour les fluides entre l'intérieur du réceptacle (10) et l'air ambiant de manière que l'air soit aspiré en retour par le passage (25/44, 27, 24, 20; 56, 27, 52, 60), établissant ainsi un niveau du liquide dans la partie de passage s'étendant vers le haut (27) qui est au-dessous de l'extrémité supérieure de la partie de passage s'étendant vers le haut (27).

2. Dispositif distributeur selon la revendication 1, caractérisé par une chambre (23; 52) dans la partie inférieure de laquelle peut pénétrer du liquide provenant de l'intérieur du réceptacle (10) et par la partie supérieure de laquelle du liquide peut être expulsé au travers de la partie de passage de sortie (20; 60), formant ainsi la partie de passage s'étendant vers le haut (27).

3. Dispositif distributeur selon la revendication 2, caractérisé en ce que la chambre (23) est délimitée par une paroi en forme de cuvette inversée (22).

4. Dispositif distributeur selon la revendication 3, caractérisé en ce que la paroi en forme de cuvette inversée (22) est munie d'ouvertures (25; 44) pour la pénétration du liquide.

5. Dispositif distributeur selon l'une quelconque des revendications 2 à 4, caractérisé en ce que la partie de passage de sortie est constituée par un conduit (20) comportant une extrémité supérieure (24) dans la partie supérieure de la chambre (23).

6. Dispositif distributeur selon la revendication 5, caractérisé en ce que la position verticale de l'extrémité supérieure (24) du conduit de sortie (20) est réglable.

7. Dispositif distributeur selon la revendication 2, caractérisé par un conduit (56) comportant une extrémité inférieure dans la partie inférieure de la chambre (52) en vue de la pénétration du liquide.

8. Dispositif distributeur selon la revendication 2 ou 7, caractérisé en ce que la partie de passage de sortie est constituée par une ouverture (60) dans la partie supérieure de la chambre (52).

9. Dispositif distributeur selon la revendication 8, caractérisé en ce que la paroi de la chambre comprend une portion en pente vers le bas à partir de l'ouverture (60).

10. Dispositif distributeur selon l'une quelconque des revendications 2 à 9, caractérisé en ce que la chambre (23) est située à l'intérieur du réceptacle (10).

11. Dispositif distributeur selon l'une quelconque des revendications 2 à 9, caractérisé en ce que la chambre (23; 52) est située à l'extérieur du réceptacle (10).

12. Dispositif distributeur selon l'une quelconque des revendications 1 à 11, caractérisé en ce que les moyens d'actionnement sont constitués par un réceptacle élastiquement compressible (10).

13. Dispositif distributeur selon l'une quelconque des revendications 1 à 12, caractérisé par un élément de base (32; 50) auquel le réceptacle (10) est fixé de façon amovible, l'élément de base (32; 50) contenant le passage (25/44, 27, 24, 20; 56, 27, 52, 60) et comprenant l'ouverture de décharge.

14. Dispositif distributeur selon la revendication 13, caractérisé en ce que le réceptacle (10) est fixé à l'élément de base (32; 50) par une filetage (28, 30; 48).

15. Elément de base (32; 50) destiné à être utilisé avec un réceptacle (10) contenant une certaine quantité de liquide, en tant que dispositif distributeur selon la revendication 13 ou 14, caractérisé en ce que l'élément de base (32; 50) comprend un filetage (30; 48) pour y fixer le réceptacle (10), un espace en forme de cuvette pour loger le passage (44, 27, 24, 20; 56, 27, 52, 60), et l'ouverture de décharge.

FIG. 1

FIG. 2

FIG. 3

1